# EUROPEAN PATENT SPECIFICATION

(11) **EP 3 018 680 B1**
(45) Date of publication and mention of the grant of the patent: **01.11.2017**
(21) Application number: 14819347.7
(22) Date of filing: 04.07.2014
(51) Int. Cl.: H01H 13/16, B60R 21/015

(54) **MEMBRANE AND SEAT DEVICE**
MEMBRAN UND SITZVORRICHTUNG
MEMBRANE ET DISPOSITIF D'APPUI

(30) Priority: 05.07.2013 JP 2013141966
(43) Date of publication of application: 11.05.2016
(73) Proprietor: Fujikura Ltd., Tokyo 135-8512 (JP)
(72) Inventor: NAKAZAKI, Shigeru, Tokyo 135-8512 (JP)
(74) Representative: Grünecker Patent- und Rechtsanwälte PartG mbB
(86) International application number: PCT/JP2014/067991
(87) International publication number: WO 2015/002320

(56) References cited:
- EP-A1- 1 429 357
- JP-A- H1 199 866
- JP-A- H1 199 866
- JP-A- 2006 509 337
- JP-A- 2012 121 364
- JP-A- 2013 016 285
- US-A1- 2008 180 234
- US-B1- 6 424 268

## Description

### Technical Field

The present invention relates to a membrane and a seat device.

### Background Art

A seating sensor for detecting whether or not a passenger is seated is provided on a seat of an automobile. If such seating sensor is configured by a membrane, such membrane sometimes includes a first film with a first wiring. Additionally, an inexpensive raw material such as a PET film and a PEN film is sometimes used for the first film.

EP 1429357 A1 relates to a foil-type switching element with multi-layered carrier foil and discloses all of the features in the preamble of claim 1.

### Prior Art Literature

### Patent Literature

Patent Literature 1: JP 2012-121364 A

### Summary of Invention

### Problem to be Solved by the Invention

The PET, the PEN, and the like are inexpensive, but have a relatively small heat capacity. Therefore, when a combustion test is performed on the membrane, the film, and the like at the periphery of the wiring are combusted when the first wiring reaches a high temperature by greater than or equal to a certain extent. Furthermore, when the film and the like at the periphery of the wiring are combusted, the wiring may sag by its own weight. In this case, the molten film flows along the sagged wiring, thus acting as a fuel and increasing the force of the fire at the periphery of the distal end of the sagged wiring, and the entire membrane may be burnt by a high temperature outer flame part of the fire of the relevant portion. In light of the foregoing problem, the object of the present invention is to provide a membrane excelling in flame retardancy, and a seat device using the same.

### Means for Solving the Problem

A membrane according to the present invention includes a first film having at least a first wiring. A layer of flame retardant material is formed on a surface not formed with the first wiring of the first film. The layer contains an organic substance and phosphorus, and that forms a layer of carbide for physically supporting the first wiring by combustion.

The membrane according to the present invention includes the layer of flame retardant material that forms a layer of carbide (char) for physically supporting the first wiring by combustion. Therefore, the wiring can be prevented from sagging. Additionally, the supply of oxygen to the combusting portion can be shielded by the char. Moreover, since the char has low thermal conductivity, the conduction of heat to the membrane can be significantly reduced. Therefore, the flame retardancy of the membrane can be enhanced. Note that in the membrane according to the present invention, the flame retardant material contains the organic substance and the phosphorus. Therefore, at the time of combustion of the membrane, a char having the organic substance as a material can be formed and the formation of such char can be promoted with the phosphorus.

According to one embodiment of the present invention, the organic substance may be a polyester resin. The polyester resin has high polymerization degree compared to the other resins, and thus has high durability, strong withstanding to pulling, and also flexibility so as to have strong withstanding to stress as well.

According to another embodiment of the present invention, the organic substance may contain carboxyl group (COOH) . Thus, the adhesiveness of the flame retardant material and the first film can be enhanced, and the occurrence of stripping and cracks at the time of combustion can be suppressed.

According to further another embodiment of the present invention, the phosphorus may be bonded to a side chain of the organic substance. That is, if the organic substance and the phosphorus exist independently in the flame retardant material layer, the proportion of the concentration of the organic substance and the phosphorus may vary within the plane in the flame retardant material. In such a case, for example, the char is less likely to be formed at the portion where the amount of phosphorus is small in the membrane, and such portion tends to relatively easily burn. Additionally, at where the phosphorus exists in excess, the phosphorus may precipitate to the surface. On the contrary, in the present embodiment, the phosphorus is bonded to the side chain of the organic substance. Therefore, the variation within the plane of the proportion of the organic substance and the phosphorus can be prevented, and the char can be appropriately formed at the time of the combustion of the membrane.

According to further another embodiment of the present invention, the flame retardant material may contain ester phosphate. The flame retardant material containing the ester phosphate forms a composite film (char), which includes the polyphosphoric acid and a carbide layer on the combustion surface and thus can suitably form the char. The polyphosphoric acid is generated from a phosphorus compound. The carbide layer is generated from a dehydrated ester polymer.

Furthermore, according to the present invention, the film thickness of the layer of flame retardant material is greater than or equal to one twentieth and smaller than or equal to one third of a film thickness of a film brought into contact with the layer of flame retardant material and physically supported by the layer of carbide. That is, in view of the mechanical rigidity of the char or the like, the film thickness of the layer of flame retardant material is desirably greater than or equal to one twentieth of the film thickness of the film to support the first wiring, the molten resin, and the like with the char. Additionally, upon using the membrane, the film thickness of the layer of flame retardant material is desirably smaller than or equal to one third of the film thickness of the film so that the properties originally possessed by the film such as flexibility are not affected.

Furthermore, according to another embodiment of the present invention, the film thickness of the layer of flame retardant material may be greater than or equal to 20 µm and smaller than or equal to 100 µm. That is, in view of the mechanical rigidity of the char or the like, the film thickness of the layer of flame retardant material is desirably greater than or equal to 20 µm to support the first wiring, the molten resin, and the like with the char. Additionally, upon using the membrane, the film thickness of the layer of flame retardant material is desirably smaller than or equal to 100 µm so that the properties originally possessed by the film are not affected.

The membrane may further include a cushion material provided via the layer of flame retardant material. For example, if the membrane includes a switch that is turned to an ON state by a load, by providing the cushion material, when the load is applied, the cushion material is moved so as to enter an opening of the membrane so that the load can be easily propagated to the switch. In such a case, the ignition to the membrane can be suitably prevented even if the cushion material is ignited, for example, and furthermore, even the flame retardancy in the cushion material can be enhanced by shielding the thermal conduction.

A seat device according to the present invention includes: a cushion pad on which a passenger of an automobile sits; and any one of the membranes to be attached to the cushion pad, the layer of flame retardant material being formed on a surface not facing the cushion pad of the first film.

### Effects of Invention

According to the present invention, a membrane excelling in flame retardancy and a seat device using the same can be provided.

### Brief Description of Drawings

[Fig. 1] A plan view for describing a membrane 3 and a seat device according to a first embodiment of the present invention
[Fig. 2] A side view for describing the membrane 3 and the seat device according to the embodiment
[Fig. 3] A cross-sectional view cut along a line A-A' of Fig. 1
[Fig. 4] A plan view of the membrane 3 according to the embodiment
[Fig. 5] A cross-sectional view cut along a line B-B' of Fig. 4
[Fig. 6] A circuit diagram showing a circuit configuration of the membrane 3 according to the embodiment
[Figs. 7] Schematic views describing a phenomenon in the combustion of a membrane 3' according to a comparative example
[Figs. 8] Schematic views describing a function of a flame retardant material layer 38 of the membrane 3 according to the first embodiment of the present invention
[Fig. 9] A graph showing a relationship of a film thickness of the flame retardant material layer 38 and a weight of a char formed after combusting the membrane 3
[Fig. 10] A graph showing a relationship of the film thickness of the flame retardant material layer 38, a film thickness of the char, and a combustion speed
[Fig. 11] A side view for describing a membrane 3-2 and a seat device according to a second embodiment of the present invention

### Mode for Carrying Out the Invention

### [1. Seat device and membrane according to first embodiment]

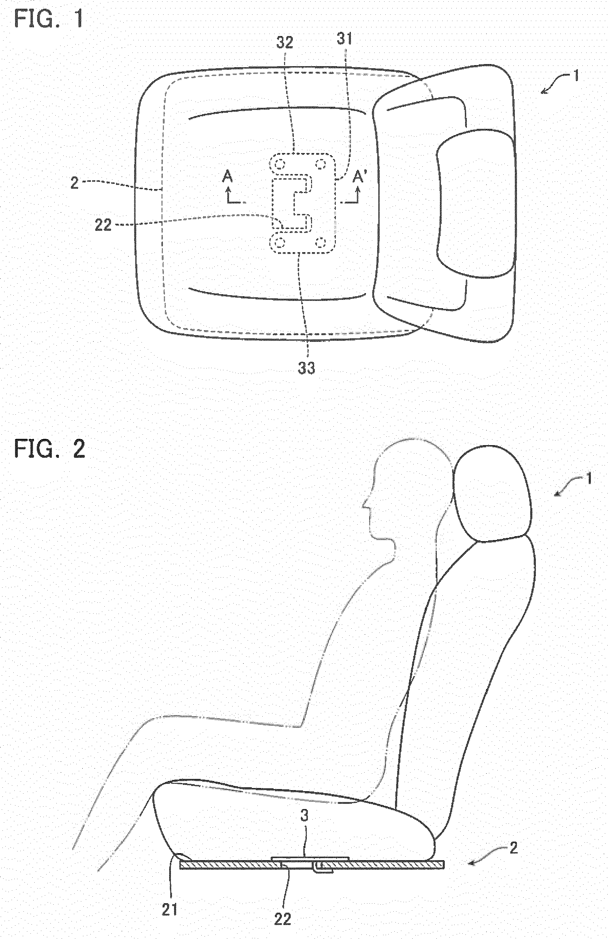

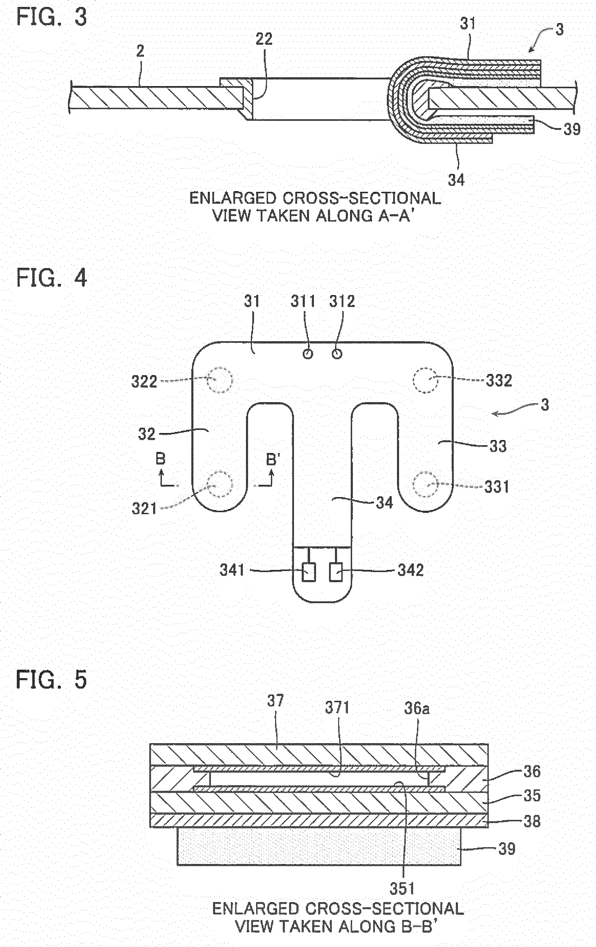

Now, a membrane and a seat device according to a first embodiment of the present invention will be described with reference to the drawings. Fig. 1 is a plan view for describing a membrane and a seat device according to the present embodiment, Fig. 2 is a side view, and Fig. 3 is a cross-sectional view cut along a line A-A' of Fig. 1. Fig. 4 is a plan view of a membrane 3. The seat device according to the present embodiment includes a seat 1, a seat pan 2 for installing the seat 1, and the membrane 3 for detecting the seating of the passenger. In the present embodiment, a membrane switch having a three-layer structure is adopted for the membrane 3, but other configurations may be adopted.

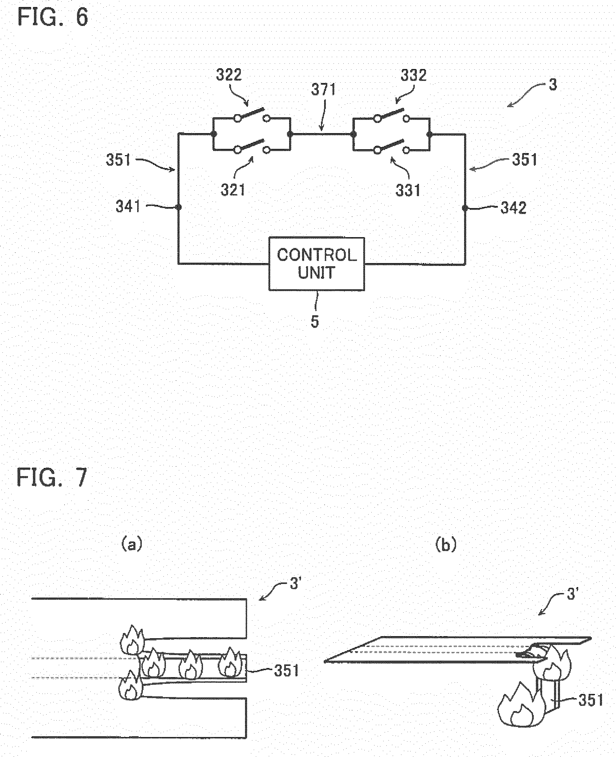

The membrane 3 is provided at a portion on a rear side of an opening 22 of an installing surface 21 of the seat pan 2, and as shown in Fig. 4 , includes a sensor stem part 31 extended in a direction orthogonal to an advancing direction of an automobile, a sensor side part 32 and a sensor side part 33 provided on the left and right of the opening 22 of the installing surface 21, connected to both ends of the sensor stem part 31, and extended in the advancing direction of the automobile, and a tail part 34 connected to a center position of the sensor stem part 31 and extended in the advancing direction of the automobile. When attaching the sensor 3 to the seat pan 2, the tail part 34 is attached to a back surface of the installing surface 21 via the opening 22 (see Fig. 3), and connected to a control unit 5 (see Fig. 6), to be described later, via terminals 341 and 342 formed at a front end portion. The membrane 3 may be provided so that, for example, the sensor stem part 31 is located on a front side of the opening 22.

A switch 321 and a switch 331 are provided at the front end portions of the sensor side parts 32 and 33, respectively. A switch 322 and a switch 332 are provided at the back end portions of the sensor side parts 32 and 33, respectively. The switches 321, 322, 331, and 332 can, for example, be formed from a pair of electrodes formed on the surfaces facing each other through a space formed by a spacer, in which case, the electrode can be brought into contact by pushing to obtain conduction. The switches 321, 322, 331, and 332 can adopt a configuration capable of detecting the pressure and obtaining electrical conduction.

Fig. 5 is a side view cut along a line B-B' of Fig. 4. The membrane 3 includes a first film 35 with a first wiring 351, a spacer 36 stacked on a surface formed with the first wiring 351 of the first film 35 and having an opening 36a at one part, and a second film 37 stacked on the spacer 36 and having a second wiring 371 that configures an electrical circuit with the first wiring 351. A flame retardant material layer 38 containing an organic substance and phosphorus is formed on a surface not formed with the first wiring 351 of the first film 35. Furthermore, the first film 35 includes a cushion material 39 via such flame retardant material layer 38.

The first film 35, the spacer 36, and the second film 37 can be generated from a resin having flexibility such as polyethylene terephthalate (PET), polyethylene naphthalate (PEN). The first wiring 351 and the second wiring 371 can be formed by printing a metal such as silver, carbon paste, and the like on such resin.

Fig. 6 is a circuit diagram showing a circuit configuration of the membrane 3. That is, the membrane 3 is formed from a series circuit obtained by connecting, in series, a terminal 341 provided on the tail part 34 , a parallel circuit including the switches 321 and 322 provided on the sensor side part 32, a parallel circuit including the switches 331 and 332 provided on the sensor side part 33, and a terminal 342 provided on the tail part 34. The terminal 341 and the terminal 342 provided on the tail part 34 are connected to the control unit 5 on the back side of the installing surface 21, and a potential difference is supplied thereto. Therefore, when the passenger sits on the seat 1, the upper surface of the seating sensor 3 is pushed. When at least one of the switches 321 and 322 provided on the sensor side part 32 and at least one of the switches 331 and 332 provided on the sensor side part 33 enter a conducted state, a detection current is flowed to the control unit 5 and the membrane 3, and the control unit 5 detects the seating of the passenger. Therefore, the seating can be detected even if the passenger is in a forward tilting posture, and the like

### [2. Flame retardant material layer 38]

### [2-1. Outline]

The flame retardant material layer 38 will now be described. Fig. 7 is schematic views describing a phenomenon in the combustion of a membrane 3' according to a comparative example. The membrane 3' according to the comparative example is basically configured substantially similar to the membrane 3 according to the present embodiment, but differs in that the flame retardant material layer 38 is not provided.

The seat pan 2 is often formed from a material that does not have flexibility, and hence an appropriate load may not be propagated to the membrane 3 from the seat pan 2, and the load may not be appropriately detected. In the comparative example, therefore, the cushion material 39 is interposed between the seat pan 2 and the first film 35. Thus, when the load is applied, the cushion material 39 is moved to enter the opening 22 of the membrane 3, so that the load can be appropriately propagated to the membrane 3. However, since the cushion material 39 generally has a small heat capacity compared to the seat pan 2, the cushion material 39 has a possibility of being ignited before the membrane 3 when an excessive heat is applied.

When the cushion material 39 is ignited, the film, and the like at the periphery of the wiring are sometimes combusted when the first wiring 351 or the second wiring 371 reaches a high temperature by greater than or equal to a certain extent. Furthermore, when the film, and the like at the periphery of the wiring are combusted, the wiring may sag by its own weight. In this case, the molten film flows along the sagged wiring, thus acting as a fuel and increasing the force of the fire at the periphery of the distal end of the sagged wiring. The entire membrane 3' may be burnt by a high temperature outer flame part of the fire of the relevant portion.

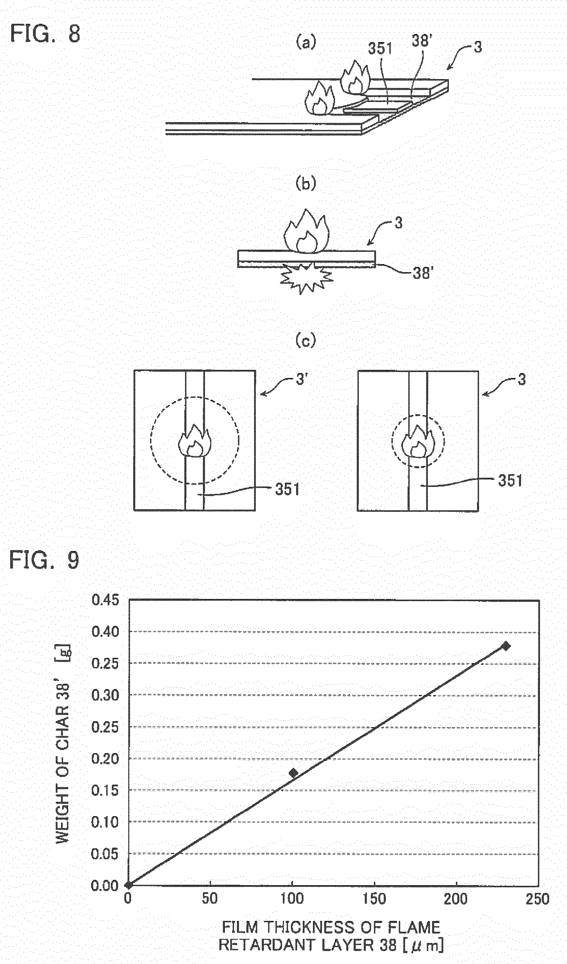

The membrane 3 according to the present embodiment includes the flame retardant material layer 38, which contains an organic substance or phosphorus, between the first film 35 and the cushion material 39. The membrane 3 according to the present embodiment includes the cushion material 39, and hence the load can be appropriately propagated to the membrane 3, similar to the comparative example. Additionally, for example, as shown in Fig. 8(a), the flame retardant material containing the organic substance and the phosphorus forms a char (carbide) 38' having the organic substance as the material on a combustion surface. The phosphorus in the flame retardant material layer promotes the change of the organic substance to the char in the combustion. Therefore, as shown in Fig. 8(a), in the membrane 3 according to the present embodiment, the first wiring 351 or the second wiring 371 is physically supported by the char 38' so that the sagging of the wiring can be prevented. Additionally, as shown in Fig. 8(b), the supply of oxygen to the combusting portion can be shielded by the char 38'. Moreover, as shown in Fig. 8(c), the thermal conduction from the cushion material 39 to the first film 35 can be significantly reduced since the char 38' has a low thermal conductivity. Therefore, the flame retardancy of the membrane 3 can be enhanced.

### [2-2. Suitable flame retardant material]

In the present embodiment, the flame retardant material layer 34 is generated by applying the flame retardant material, in a paste form, containing the organic substance and the phosphorus on the first film 35. The organic substance contained in the flame retardant material may be, for example, polyester resin, epoxy resin, and the like. In particular, the polyester resin has a high polymerization degree compared to the other resins, and thus has high durability, strong withstanding to pulling, and also flexibility so as to have strong withstanding to stress as well. Therefore, the polyester resin is suitable for the organic substance in the flame retardant material.

The organic substance may contain carboxyl group (COOH). Thereby, the adhesiveness of the flame retardant material and the first film can be enhanced, and the occurrence of stripping and cracks at the time of combustion can be suppressed. Note that, when referring to "containing carboxyl group (COOH)", this means that, for example, the carboxyl group (COOH) is contained as a side chain of polymerized polyester.

Furthermore, the phosphorus contained in the flame retardant material maybe bonded to the side chain of the organic substance. That is, if the organic substance and the phosphorus exist independently in the flame retardant material layer, the proportion of the concentration of the organic substance and the phosphorus may vary within the plane in the flame retardant material. In such a case, for example, the char is less likely to be formed at the portion where the amount of phosphorus is small in the membrane, and such portion tends to relatively easily burn. Additionally, at where the phosphorus exists in excess, the phosphorus may precipitate to the surface. On the contrary, in the present embodiment, the phosphorus is bonded to the side chain of the organic substance. Therefore, the variation within the plane of the proportion of the organic substance and the phosphorus can be prevented, and the char can be appropriately formed at the time of the combustion of the membrane.

The flame retardancy can be more suitably enhanced by using the flame retardant material containing ester phosphate as the flame retardant material containing the organic substance and the phosphorus. The flame retardant material containing the ester phosphate forms a composite film (char), which includes the polyphosphoric acid and a carbide layer on the combustion surface and thus can suitably form the char. The polyphosphoric acid is generated from a phosphorus compound. The carbide layer is generated from a dehydrated ester polymer.

As the flame retardant material containing the ester phosphate, for example, application of a material of aromatic ester phosphate series (triphenylphosphate, etc.), a material of aromatic condensed ester phosphate series (1, 3 - phenylene bis (diphenylphosphate), etc.), a material of halogen containing ester phosphate series (tris (dichloropropyl) phosphate, etc.), a material of halogen containing condensed ester phosphate series (polyoxy alkylene bis dichloro alkyl phosphate etc.) can be considered. Additionally, a flame retardant material other than the flame retardant material containing the ester phosphate can be used, and for example, a material of red phosphorus series (e.g., red phosphorus) can be applied for such flame retardant material.

### [2-3. Application of flame retardant material]

Next, a mode of when applying the flame retardant material containing the organic substance and the phosphorus on, for example, the first film 35 will be described. Upon performing the application, the flame retardant material is applied on the first film 35 as a paste containing a solvent. Thereafter, the applied paste is dried to form the flame retardant material layer 38. For the solvent contained in the paste, for example, application of that of diethylene glycol monoethyl ether acetate (CH₃COOC₂H₄OC₂H₄OC₂H₅) having a viscosity of 150 to 250 dPa·s is considered.

### [2-4. Film thickness of flame retardant material layer 38]

As described above, the membrane 3 according to the present embodiment forms the char 38' at the time of the combustion firstly, to physically support the wirings 351, 371, secondly, to shield the supply of oxygen, and thirdly, to shield the thermal conduction. Therefore, the range of the film thickness of the flame retardant material layer 38 needs to be determined in view of the mechanical rigidity of the formed char, the shielding property of the oxygen, the thermal conductivity, and the like. The film thickness of the flame retardant material layer 38 will now be reviewed.

Fig. 9 is a graph showing a relationship of the film thickness of the flame retardant material layer 38, and the weight of the char 38' formed after the membrane 3 is combusted. As shown in Fig. 9, it is found that the weight of the formed char 38' increases in proportion to the film thickness of the flame retardant material layer 38. Therefore, the amount of formed char 38' can be suitably controlled by the film thickness of the flame retardant material layer 38.

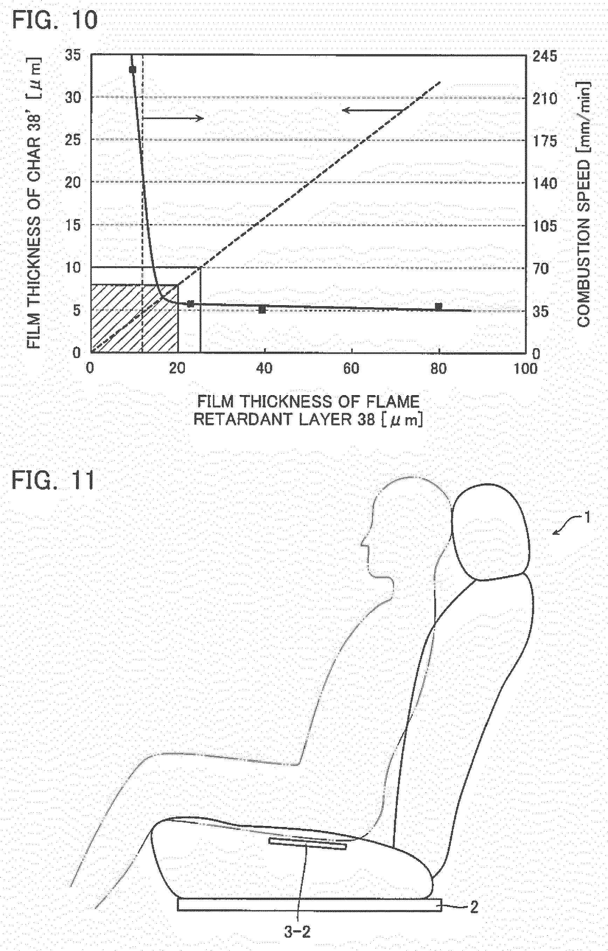

Fig. 10 is a graph showing a relationship of the film thickness of the flame retardant material layer 38 and the film thickness and the combustion speed of the char 38'. According to the figure, it is found that the combustion speed is suppressed to smaller than or equal to 50 mm/min when the film thickness of the flame retardant material layer 38 is greater than or equal to 20 µm, whereas the combustion speed rapidly increased when the film thickness is, for example, 10 µm. This is because if the film thickness is set to 10 µm, the generated char 38' breaks without being able to support the wiring, the dissolved resin, and the like, and the sagging described above occurs. Note that the total thickness of the membrane 3 was 400 µm.

The film thickness of the flame retardant material layer 38 that does not cause mechanical breakage of the char 38' changes according to the film thickness of the film physically supported by the char 38' such as the first film 35. The film thickness of the flame retardant material layer 38 may become uneven in the process of applying the flame retardant material on the first film 35. As a result of reviewing the results of the above described experiment and the above embodiments, the inventors assumed that the film thickness of the flame retardant material layer 38 that does not cause mechanical breakage of the char 38' is t2 ≥ t1/20, where t1 is the film thickness of the film physically supported by the char 38' such as the first film 35 or the second film 37, and t2 is the film thickness of the flame retardant material layer 38.

If the film to be supported is, for example, the first film 35 and the second film, the film thickness t1 of the film physically supported by the char 38' is, for example, the sum of the film thicknesses of the first and second films. If the membrane 3 further includes films to be supported at the time of the combustion, the film thickness becomes a size including the film thickness of the relevant films. Moreover, if only one layer exists for the film to be physically supported by the char 38', as shown in a third embodiment to be described later, the film thickness of the film physically supported by the char 38' becomes equal to the film thickness of such film. Furthermore, if another layer is configured from a different material, the weight, and the like of the relevant layer also need to be considered. If the first film 35, and the like, and the type of flame retardant material differ from the present embodiment, such embodiment also needs to be taken into consideration.

In view of the shielding property of the oxygen, the thermal conductivity, and the like of the char 38', the film thickness of the flame retardant material layer 38 is assumed to be greater than or equal to 20 µm. Note that the flame retardant material is desirably applied over the entire surface of the first film 35, but even if the flame retardant material is applied to only one part, the mechanical strength can be ensured and the heat insulating effect can be exhibited.

If the flame retardant material layer 38 is too thick, the properties originally possessed by the film such as flexibility, and the like may be affected in the usage of the membrane. The membrane 3 according to the present embodiment includes the switches 321, 322, 331, and 332, which are turned to the ON state by pushing. Therefore, if the flame retardant material layer 38 is too thick, the film is less likely to bend, and an ON load for turning the switches to the ON state becomes high. In view of such aspect, the film thickness of the flame retardant material layer 38 is desirably smaller than or equal to 100 µm. Thus, the ON load can be adjusted to an appropriate range.

The appropriate film thickness of the flame retardant material layer 38 of when the ON load is taken into consideration varies according to the film thickness of the film. In view of such aspect, the film thickness t2 of the flame retardant material layer 38 is desirably t2 ≤ t1/3, where t1 is the film thickness of the film physically supported by the char 38' such as the first film 35 or the second film 37, and t2 is the film thickness of the flame retardant material layer 38. Thus, the ON load can be adjusted to an appropriate range. Additionally, the film thickness t2 of the flame retardant material layer 38 is more desirably t2 ≤ t1/5.

### [3. Seat device according to second embodiment]

Next, a membrane 3-2 and a seat device according to a second embodiment of the present invention will be described with reference to the drawings. Fig. 11 is a side view for describing the membrane 3-2 and the seat device according to the present embodiment. In the first embodiment, the membrane 3 is installed between the seat 1 and the seat pan 2, but in the present embodiment, the membrane 3-2 is installed on the seating face of a seat 1. Furthermore, in the membrane 3-2 according to the present embodiment, a cushion material 39 is formed on a side not facing the seat 1, and a flame retardant material layer 38 is formed between the cushion material and a first film 35 or a second film 37. Thatis, the flame retardant material layer 38 may be formed on a surface not facing the seat 1 of a surface not formed with a first wiring 351 of the first film 35 and a surface 371 not formed with a second wiring of the second film 37, or may be formed on an open space side of such surfaces. Additionally, in the present embodiment, the cushion material 39 is formed via the flame retardant material layer 38, but the cushion material 39 sometimes may not be formed.

### [4. Seat device according to third embodiment]

Next, a membrane and a seat device according to a third embodiment of the present invention will now be described. In the first and second embodiments, the membrane switch having a three-layer structure is adopted for the membrane. On the contrary, in the present embodiment, a capacitance sensor having a one-layer structure is adopted for the membrane. Note that the membrane and the seat device according to the present embodiment are similar to the first and second embodiments with regards to the other aspects. In such a case as well, the membrane excelling flame retardancy and the seat device using the same can be supplied by providing the flame retardant material layer 38. Note that in the present embodiment, the membrane has a one-layer structure. Therefore, if other layers are not formed in the membrane, the film physically supported by a char 38' is only one layer.

### Description of the Reference Numerals

1 seat
2 seat pan
3 membrane
5 control unit
21 installing surface
22 opening
31 sensor stem part
32, 33 sensor side part
34 tail part
35 first film
36 spacer
37 second film
38 flame retardant material layer
38' char (carbide)
39 cushion material
311 first fixing hole
312 second fixing hole
321, 322, 331, 332 switch
341, 342 terminal
351 first wiring
371 second wiring

## Claims

1. A membrane (3) comprising:
a first film (35) having at least a first wiring (351), and
a layer (38) of flame retardant material,
**characterized in that**
the layer (38) of flame retardant material is formed on a surface not formed with the first wiring (351) of the first film (35), the layer (38) containing an organic substance and phosphorus, and forming a layer (38') of carbide for physically supporting the first wiring (351) by combustion, and a film thickness of the layer (38) of flame retardant material is greater than or equal to one twentieth and smaller than or equal to one third of a film thickness of a film brought into contact with the layer (38) of flame retardant material and physically supported by the layer (38') of carbide.

2. The membrane (3) according to claim 1, wherein the organic substance is polyester resin.

3. The membrane (3) according to claim 1 or 2, wherein the organic substance contains carboxyl group (COOH).

4. The membrane (3) according to any one of claims 1 to 3, wherein the phosphorus is bonded to a side chain of the organic substance.

5. The membrane (3) according to any one of claims 1 to 4, wherein the flame retardant material contains ester phosphate.

6. The membrane (3) according to any one of claims 1 to 5, wherein the film thickness of the layer (38) of flame retardant material is greater than or equal to 20 µm and smaller than or equal to 100 µm.

7. The membrane (3) according to any one of claims 1 to 6, further comprising a cushion material (39) provided via the layer (38) of flame retardant material.

8. A seat device (1) comprising:
a cushion pad on which a passenger of an automobile sits; and
the membrane (3) according to any one of claims to 1 to 7 to be attached to the cushion pad,
the layer (38) of flame retardant material being formed on a surface not facing the cushion pad of the first film (35).

## Patentansprüche

1. Membran (3), mit:
einer ersten Schicht (35) mit einer ersten Verdrahtung (351), und
einer Schicht (38) aus flammhemmendem Material,
**dadurch gekennzeichnet, dass**
die Schicht (38) aus flammhemmendem Material auf einer Oberfläche ausgebildet ist, auf der die erste Verdrahtung (351) der ersten Schicht (351) nicht ausgebildet ist, wobei die Schicht (38) eine organische Substanz und Phosphor enthält und eine Carbid-Schicht (38') zum mechanischen Tragen der ersten Verdrahtung (351) durch Verbrennung bildet, und wobei eine Schichtdicke der Schicht (38) aus flammhemmendem Material größer oder gleich einem Zwanzigstel und kleiner oder gleich einem Drittel einer Schichtdicke einer Schicht ist, die mit der Schicht (38) aus flammhemmendem Material in Kontakt gebracht ist und mechanisch von der Carbid-Schicht (38') getragen wird.

2. Membran (3) nach Anspruch 1, wobei die organische Substanz ein Polyesterharz ist.

3. Membran (3) nach Anspruch 1 oder 2, wobei die organische Substanz eine Carboxylgruppe (COOH) enthält.

4. Membran (3) nach einem der Ansprüche 1 bis 3, wobei der Phosphor an eine Seitenkette der organischen Substanz gebunden ist.

5. Membran (3) nach einem der Ansprüche 1 bis 4, wobei das flammhemmende Material Esterphosphat enthält.

6. Membran (3) nach einem der Ansprüche 1 bis 5, wobei die Schichtdicke der Schicht (38) aus flammhemmendem Material größer oder gleich 20 µm und kleiner oder gleich 100 µm ist.

7. Membran (3) nach einem der Ansprüche 1 bis 6, die ferner ein Polstermaterial (39) aufweist, das mittels der Schicht (38) aus flammhemmendem Material bereitgestellt ist.

8. Sitzvorrichtung (1) mit:
einem Sitzkissen, auf welchem ein Insasse eines Fahrzeugs sitzt; und
der Membran (3) nach einem der Ansprüche 1 bis 7, die an dem Sitzkissen zu befestigen ist,
wobei die Schicht (38) aus flammhemmendem Material auf einer Oberfläche ausgebildet ist, die nicht dem Sitzkissen der ersten Schicht (35) zugewandt ist.

## Revendications

1. Membrane (3) comprenant :
un premier film (35) ayant au moins un premier câblage (351), et
une couche (38) de matériau ignifuge,
**caractérisée en ce que**
la couche (38) de matériau ignifuge est formée sur une surface non formée avec le premier câblage (351) du premier film (35), la couche (38) contenant une substance organique et du phosphore, et formant une couche (38') de carbure pour supporter physiquement le premier câblage (351) par combustion, et une épaisseur de film de la couche (38) de matériau ignifuge étant supérieure ou égale à un vingtième ou inférieure ou égale à un tiers d'une épaisseur de film d'un film porté au contact de la couche (38) de matériau ignifuge et supporté physiquement par la couche (38') de carbure.

2. Membrane (3) selon la revendication 1, la substance organique étant une résine de polyester.

3. Membrane (3) selon la revendication 1 ou 2, la substance organique contenant un groupe carboxyle (COOH).

4. Membrane (3) selon l'une quelconque des revendications 1 à 3, le phosphore étant lié à une chaîne latérale de la substance organique.

5. Membrane (3) selon l'une quelconque des revendications 1 à 4, le matériau ignifuge contenant du phosphate ester.

6. Membrane (3) selon l'une quelconque des revendications 1 à 5, l'épaisseur de film de la couche (38) de matériau ignifuge étant supérieure ou égale à 20 µm et inférieure ou égale à 100 µm.

7. Membrane (3) selon l'une quelconque des revendications 1 à 6, comprenant en outre un matériau de rembourrage (39) prévu via la couche (38) de matériau ignifuge.

8. Dispositif type siège (1) comprenant :
un coussin sur lequel un passager d'une automobile s'assied ; et
la membrane (3) selon l'une quelconque des revendications 1 à 7 à fixer au coussin,
la couche (38) de matériau ignifuge étant formée sur une surface ne faisant pas face au coussin du premier film (35).
